# EUROPÄISCHE PATENTANMELDUNG

(11) **EP 4 436 106 A1**
(43) Veröffentlichungstag der Anmeldung: **25.09.2024**
(21) Anmeldenummer: 23163784.4
(22) Anmeldetag: 23.03.2023
(51) Int. Cl.: H04L 9/40, G06F 21/50

(54) **VERFAHREN UND GATEWAY ZUR DATENÜBERMITTLUNG ZWISCHEN AUTOMATISIERUNGSGERÄTEN EINES INDUSTRIELLEN AUTOMATISIERUNGSSYSTEMS UND ZUMINDEST EINEM RECHNERSYSTEM ÜBER EIN WEITVERKEHRSNETZ**

(71) Anmelder: Siemens Aktiengesellschaft, 80333 München (DE)
(72) Erfinder: Boche, Maik, 90522 Oberasbach (DE); Bölderl-Ermel, Wolfgang, 90530 Wendelstein (DE); Falk, Rainer, 85435 Erding (DE)
(74) Vertreter: Siemens Patent Attorneys

(57) **Zusammenfassung**

Zur Datenübermittlung zwischen Automatisierungsgeräten eines industriellen Automatisierungssystems und zumindest einem Rechnersystem über ein Weitverkehrsnetz stellen die Automatisierungsgeräte (101-105) Mess- bzw. Zustandsgrößen jeweils an einem Datenpunkt über eine erste Schnittstelle (231) eines Gateways (200) bereit. Das Gateway umfasst eine zweite Schnittstelle (232) zur Weiterleitung von den Datenpunkten jeweils zugeordneten Datenströmen an das Rechnersystem (400) und erstellt jeweils eine erste Klassifizierung (21) der Datenpunkte nach Informationssicherheit-Kritikalität der von dort ausgehenden Datenströmen. Auf Basis der jeweiligen ersten Klassifizierung und einer jeweiligen vorgebbaren Filterung bzw. Aggregierung erstellt das Gateway jeweils eine zweite Klassifizierung (22) nach Informationssicherheit-Kritikalität. Bei einer zumindest versuchten Weiterleitung der Datenströme an das Rechnersystem erstellt das Gateway entsprechend den jeweiligen zweiten Klassifizierungen die jeweiligen zweiten Klassifizierungen umfassende Warnungen (20).

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen im wesentlichen selbständigen Betrieb von Steuerungseinrichtungen, Sensoren, Maschinen und technischen Anlagen. Eine wesentliche Grundlage für eine zuverlässige Bereitstellung von Überwachungs-, Steuerungs- und Regelungsfunktionen mittels eines Prozessautomatisierungssystems besteht in einer vollständigen und korrekten Erfassung und Abbildung von Komponenten des industriellen Prozessautomatisierungssystems in einem Engineerung- bzw. Projektierungssystem.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

In EP 2 660 667 A2 ist ein Cloud-Gateway zur Kopplung eines industriellen Steuerungssystems an eine Cloud-Plattform beschrieben. Das Cloud-Gateway sammelt Daten von einer oder mehreren industriellen Steuerungen, Zählern, Sensoren oder anderen Automatisierungsgeräten. Optional führt das Cloud-Gateway führt zusätzliche Transformationen an den Daten durch, um einen Kontext hinzuzufügen, die Daten zusammenzufassen, zu filtern, neu zu formatieren bzw. zu verschlüsseln. Entsprechende Daten sendet das Cloud-Gateway an eine Cloud-Plattform, die durch eine oder mehrere Cloud-basierte Anwendungen oder Dienste verwendet wird. Das Cloud-Gateway kann Cloud-basierte Datenerfassung sowohl von stationären als auch mobilen industriellen Systemen ermöglichen. Außerdem kann das Cloud-Gateway auch Store-and-Forward-Logik unterstützen, wodurch industrielle Daten temporär im lokalen Speicher gespeichert werden können, falls eine Kommunikation zwischen dem Cloud-Gateway und der Cloud-Plattform gestört ist.

EP 2 710 782 B1 betrifft ein Verfahren zur Überwachung eines eingerichteten und kryptographisch geschützten VPN-Tunnels für eine Überwachung einer Datenkommunikation zwischen einer Steuerung und einem Steuergerät auf Funktionalität. Eine am VPN-Tunnel positionierte VPN-Box liefert ein Betriebssicherheits-Signal/Safe-for-Use an das Steuergerät, wenn die Überwachung ergeben hat, dass der VPN-Tunnel vorgegebene Merkmale erfüllt, so dass an dem Steuergerät ein regulärer Betriebszustand aufgenommen oder beibehalten werden kann.

Aus EP 3 267 661 B1 ist ein Netzwerksystem bekannt, das einen ersten Netzwerkteilnehmer mit mehreren Netzwerkgeräten umfasst. Die Netzwerkgeräte weisen zur Identifikation Identifikationsparameter auf. Außerdem sind ein zweiter Netzwerkteilnehmer mit einer Cloud-Computing-Infrastruktur sowie ein Cloud Connector mit einer ersten Schnittstelle und einer zweiten Schnittstelle vorgesehen. Der Cloud Connector steht mittels der ersten Schnittstelle mit dem ersten Netzwerkteilnehmer in Verbindung und mittels der zweiten Schnittstelle mit dem zweiten Netzwerkteilnehmer in Verbindung. Darüber hinaus ist der Cloud Connector eingerichtet und ausgebildet, einen passiven Scan und einen aktiven Scan des ersten Netzwerkteilnehmers durchzuführen, so dass eine Identifikation von zumindest einem der Netzwerkgeräte durch den Cloud Connector bewerkstelligbar ist. Dabei ist zumindest ein Netzwerkgeräteprofil aus dem zweiten Netzwerkteilnehmer in den Cloud Connector ladbar. Der aktive Scan erfolgt auf Basis des geladenen zumindest einen Netzwerkgeräteprofils.

In EP 3 534 592 A1 ist ein Verfahren zur Datenübermittlung zwischen einem industriellen Automatisierungssystem und einem Server-System über ein Weitverkehrsnetz beschrieben, bei dem Automatisierungsgeräte Messwerte bzw. Zustandsinformationen sowie diesen zugeordnete Klassifizierungen über Kommunikationsverbindungen innerhalb des Automatisierungssystems an eine Datenverteilereinheit des Automatisierungssystems übermitteln. Anhand der Klassifizierungen gliedert die Datenverteilereinheit die Messwerte bzw. Zustandsinformationen hierarchisch in für eine Datenübermittlung auswählbare Kategorien und übermittelt Messwerte bzw. Zustandsinformationen, die von für eine Datenübermittlung zum Server-System ausgewählten Kategorien umfasst sind, innerhalb einer vorgebbaren Anzahl von Kommunikationsverbindungen gebündelt über das Weitverkehrsnetz zum Server-System. Ereignisgesteuert bzw. in Abhängigkeit eines Betriebszustands des industriellen Automatisierungssystems initiiert, begrenzt hinsichtlich Bandbreite oder beendet die Datenverteilereinheit Kommunikationsverbindungen mit dem Server-System.

Daten-getriebene Dienste für OT-Anwendungen (Operational Technology), insbesondere für nutzungsabhängige Versicherung oder vorausschauende Wartung, erfordern, dass aus einer OT-Umgebung heraus im Betrieb erfasste Daten an Dritte übertragen werden. Dabei ist zu vermeiden, dass neben den für die Dienste erforderlichen Daten auch weitere, sensible Daten abfließen.

Der vorliegenden Erfindung liegt daher die Aufgabe zugrunde, ein Verfahren zur Datenübermittlung zwischen Automatisierungsgeräten eines industriellen Automatisierungssystems und zumindest einem Rechnersystem über ein Weitverkehrsnetz anzugeben, das eine zuverlässige, nachvollziehbare und steuerbare Datenübermittlung unter Ausschluss sensibler Betriebsdaten ermöglicht, sowie eine geeignete Vorrichtung zur Durchführung des Verfahrens zu schaffen.

Diese Aufgabe wird erfindungsgemäß durch ein Verfahren mit den in Anspruch 1 angegebenen Merkmalen und durch ein Gateway mit den in Anspruch 13 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren stellen Automatisierungsgeräte eines industriellen Automatisierungssystems Mess- bzw. Zustandsgrößen jeweils an einem Datenpunkt über eine erste Schnittstelle eines Gateways des Automatisierungssystems bereit. Das Gateway umfasst eine zweite Schnittstelle zur Weiterleitung von den Datenpunkten jeweils zugeordneten Datenströmen an ein Rechnersystem über ein Weitverkehrsnetz. Datenpunkte repräsentieren insbesondere Variablen innerhalb eines Prozess- oder Fertigungsautomatisierungssystems, die beispielsweise in einer Leitstelle oder einem Prozessvisualisierungssystem dargestellt werden. Grundsätzlich können Datenpunkte auch komplexe logische Geräte mit mehreren Sensor- bzw. Aktorkomponenten repräsentieren.

Das Gateway erstellt erfindungsgemäß jeweils eine erste Klassifizierung der Datenpunkte nach Informationssicherheit-Kritikalität der von dort ausgehenden Datenströmen. Außerdem führt das Gateway eine jeweils vorgebbare Filterung bzw. Aggregierung der von den Datenpunkten ausgehenden Datenströmen vor ihrer Weiterleitung über die zweite Schnittstelle durch. Die vorgegebene Filterung bzw. Aggregierung kann insbesondere eine direkte Weiterleitung oder eine Datenverarbeitung umfassen. Vorzugsweise umfassen die Datenströme Ende-zu-Ende verschlüsselte Daten. In diesem Fall sind das jeweilige Automatisierungsgerät und das Rechnersystem vorteilhafterweise Endpunkte der Datenströme.

Die Mess- bzw. Zustandsgrößen können beispielsweise semantische Attribute entsprechend OPC Unified Architecture als zugeordnete erste Klassifizierungen umfassen. Alternativ hierzu können die Mess- bzw. Zustandsgrößen entsprechend Message Queueing Telemetry Transport Protocol (MQTT) durch die Automatisierungsgeräte an das Gateway übermittelt werden. In diesem Fall sind den Mess- bzw. Zustandsgrößen MQTT-Topics als erste Klassifizierungen zugeordnet, und die Mess- bzw. Zustandsgrößen umfassende Nachrichten werden vorteilhafterweise mit einer vorgebbaren Quality of Service (QoS) übermittelt.

Das Gateway erstellt auf Basis der jeweiligen ersten Klassifizierung und der jeweiligen vorgebbaren Filterung bzw. Aggregierung erfindungsgemäß jeweils eine zweite Klassifizierung nach Informationssicherheit-Kritikalität. Bei einer direkten Weiterleitung beispielsweise sind die zweiten Klassifizierungen mit der jeweiligen ersten Klassifizierung identisch. Darüber hinaus erstellt das Gateway erfindungsgemäß bei einer zumindest versuchten Weiterleitung der Datenströme an das Rechnersystem entsprechend den jeweiligen zweiten Klassifizierungen die jeweiligen zweiten Klassifizierungen umfassende Warnungen und signalisiert diese an einer Benutzerschnittstelle. Auf diese Weise ist für OT-Nutzer überprüfbar, dass tatsächlich nur vereinbarten Datenpunkten zugeordnete Datenströme übermittelt werden. Insbesondere können OT-Nutzer erkennen, wenn andere Daten als vereinbart bzw. zulässig übermittelt werden.

Entsprechend einer bevorzugten Ausgestaltung der vorliegenden Erfindung signalisiert das Gateway bei einem Empfang der Datenströme an der ersten Schnittstelle entsprechend den jeweiligen ersten Klassifizierungen die jeweiligen ersten Klassifizierungen umfassende Warnungen und signalisiert diese an der Benutzerschnittstelle. Auf diese Weise können unzulässige Datenabflüsse aus dem industriellen Automatisierungssystem frühzeitig erkannt und Maßnahmen zu ihrer Vermeidung schnell eingeleitet werden.

Anhand der ersten und zweiten Klassifizierungen werden vorteilhafterweise auf den jeweiligen Datenstrom zwischen der ersten und zweiten Schnittstelle angewendete Datenverarbeitungsschritte ermittelt. Auf Basis der ermittelten Datenverarbeitungsschritte wird jeweils eine durch das Gateway digital signierte Security-Attestierung erstellt und zur Auswertung an einen Betreiber des industriellen Automatisierungssystems übermittelt. Darüber hinaus können die Security-Attestierungen auch jeweils an einen dem Rechnersystem zugeordneten Empfänger zur Auswertung übermittelt werden. Damit kann der Empfänger anhand der Security-Attestierungen verifizieren, ob die jeweiligen Datenströme vertrauenswürdige Daten umfassen.

Entsprechend einer weiteren vorteilhaften Ausgestaltung der vorliegenden Erfindung sind die Warnungen jeweils mit einer dem Gateway zugeordneten digitalen Signatur versehen. Außerdem erfolgt bei einer Warnung eine Blockierung der Weiterleitung des jeweiligen Datenstroms über die zweite Schnittstelle oder eine Fortsetzung der Weiterleitung mit Alarmierung. Vorzugsweise erfolgt eine Blockierung der Weiterleitung für zweite Klassifizierungen, die als unzulässig für die Weiterleitung von Datenströmen über die zweite Schnittstelle definiert sind. Auf diese Weise können kritische Datenabflüsse aus dem industriellen Automatisierungssystem zuverlässig verhindert werden.

Das erfindungsgemäße Gateway ist zur Durchführung eines Verfahrens entsprechend vorangehenden Ausführungen vorgesehen sowie dafür ausgestaltet und eingerichtet, dass Automatisierungsgeräte Mess- bzw. Zustandsgrößen jeweils an einem Datenpunkt über eine erste Schnittstelle des Gateways bereitstellen. Dabei umfasst das Gateway eine zweite Schnittstelle zur Weiterleitung von den Datenpunkten jeweils zugeordneten Datenströmen an ein Rechnersystem über ein Weitverkehrsnetz. Außerdem ist das Gateway dafür ausgestaltet und eingerichtet, jeweils eine erste Klassifizierung der Datenpunkte nach Informationssicherheit-Kritikalität der von dort ausgehenden Datenströmen zu erstellen und eine jeweils vorgebbare Filterung bzw. Aggregierung der von den Datenpunkten ausgehenden Datenströmen vor ihrer Weiterleitung über die zweite Schnittstelle durchzuführen.

Darüber hinaus ist das erfindungsgemäße Gateway dafür ausgestaltet und eingerichtet, auf Basis der jeweiligen ersten Klassifizierung und der jeweiligen vorgebbaren Filterung bzw. Aggregierung jeweils eine zweite Klassifizierung nach Informationssicherheit-Kritikalität zu erstellen. Des Weiteren ist das Gateway dafür ausgestaltet und eingerichtet, bei einer zumindest versuchten Weiterleitung der Datenströme an das Rechnersystem entsprechend den jeweiligen zweiten Klassifizierungen die jeweiligen zweiten Klassifizierungen umfassende Warnungen zu erstellen und an einer Benutzerschnittstelle zu signalisieren.

Die vorliegende Erfindung wird nachfolgend an einem Ausführungsbeispiel anhand der Zeichnung näher erläutert. Es zeigt
- Figur 1: ein mehrere Automatisierungsgeräte umfassendes industrielles Automatisierungssystem, das über ein Gateway mit einem Cloud-Computing-System verbunden ist,
- Figur 2: eine Detaildarstellung einer Monitoring-Funktionseinheit des in Figur 1 dargestellten Gateways.

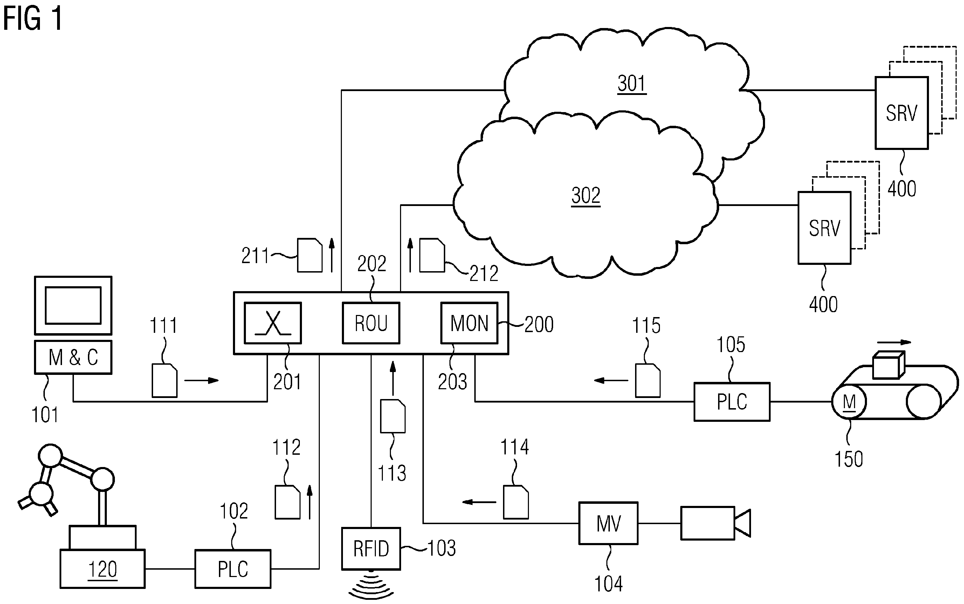

Das in Figur 1 dargestellte industrielle Automatisierungssystem umfasst mehrere Automatisierungsgeräte 101-105, die im vorliegenden Ausführungsbeispiel zumindest logisch an ein Gateway 200 angebunden sind. Das Gateway 200 ist über Internet-Kommunikationsverbindungen 301, 302 mit einem oder mehreren Cloud-Computing-Systemen 400 verbunden. Die Cloud-Computing-Systeme 400 umfassen jeweils mehrere Server, durch die IT-Infrastruktur, wie Speicherplatz, Rechenleistung oder Anwendungssoftware, als Dienst bereitgestellt wird.

Die Automatisierungsgeräte können beispielsweise Bedien- und Beobachtungsstationen 101, speicherprogrammierbare Steuerungen 102, 105, RFID-Lesegeräte 103 oder Systeme 104 für maschinelle Bildverarbeitung sein. Neben den Automatisierungsgeräten 101-105 können auch Netzinfrastrukturgeräte, wie Switche, Router oder Firewalls, direkt oder mittelbar mit dem Gateway 200 verbunden sein. Diese Netzinfrastrukturgeräte dienen insbesondere zum Anschluss von speicherprogrammierbaren Steuerungen, Eingabe/Ausgabe-Einheiten (I/O-Module) oder Bedien- und Beobachtungsstationen des industriellen Automatisierungssystems. Die speicherprogrammierbaren Steuerungen 102, 105 umfassen im vorliegenden Ausführungsbeispiel jeweils ein Kommunikationsmodul, eine Zentraleinheit sowie zumindest eine Eingabe/Ausgabe-Einheit. Eingabe/Ausgabe-Einheiten können grundsätzlich auch als dezentrale Peripheriemodule ausgestaltet sein, die entfernt von einer speicherprogrammierbaren Steuerung angeordnet sind.

Über Kommunikationsmodule können die speicherprogrammierbare Steuerungen 102, 105 beispielsweise mit dem Gateway 200, einem Switch oder Router oder zusätzlich mit einem Feldbus verbunden werden. Eingabe/Ausgabe-Einheiten dienen einem Austausch von Steuerungs- und Messgrößen zwischen den speicherprogrammierbaren Steuerungen 102, 105 und durch die speicherprogrammierbaren Steuerungen 102, 105 gesteuerten Maschinen oder Vorrichtungen 120, 150. Die Zentraleinheiten sind insbesondere für eine Ermittlung geeigneter Steuerungsgrößen aus erfassten Messgrößen vorgesehen. Obige Komponenten der speicherprogrammierbaren Steuerungen 102, 105 sind im vorliegenden Ausführungsbeispiel über ein Rückwandbus-System miteinander verbunden.

Eine Bedien- und Beobachtungsstation 101 dient zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere wird eine Bedien- und Beobachtungsstation 101 zur Anzeige von Werten eines Regelungskreises und zur Veränderung von Regelungsparametern verwendet. Bedien- und Beobachtungsstationen 101 umfassen zumindest eine graphische Benutzerschnittstelle, ein Eingabegerät, eine Prozessoreinheit und ein Kommunikationsmodul.

Das Gateway 200 umfasst im vorliegenden Ausführungsbeispiel einen integrierten Switch 201, der insbesondere zur Anbindung der Automatisierungsgeräte 101-105 vorgesehen ist, ein Router-Modul 202 für die Internet-Kommunikationsverbindungen 301, 302 sowie eine Monitoring-Funktionseinheit 203. Die Monitoring-Funktionseinheit 203 ist dafür ausgestaltet und eingerichtet, von den Automatisierungsgeräten 101-105 übermittelte Nachrichten 111-115 mit Mess- bzw. Zustandsgrößen über Kommunikationsverbindungen oder Datenlinks innerhalb des Automatisierungssystems zu empfangen.

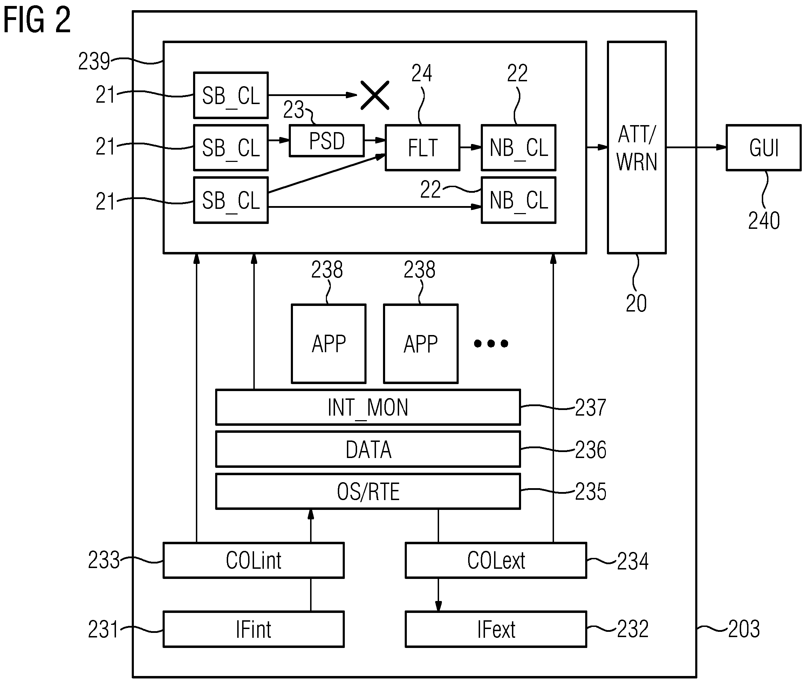

Die Automatisierungsgeräte 101-105 stellen die Mess- bzw. Zustandsgrößen jeweils an einem Datenpunkt über eine in Figur 2 dargestellte erste Schnittstelle 231 der Monitoring-Funktionseinheit 203 bereit. Die Monitoring-Funktionseinheit 203 umfasst eine zweite Schnittstelle 232 zur Weiterleitung von den Datenpunkten jeweils zugeordneten Datenströmen an die Cloud-Computing-Systeme 400. Die Datenströme umfassen vorzugsweise Ende-zu-Ende verschlüsselte Daten. Dabei sind das jeweilige Automatisierungsgerät 101-105 und das jeweilige Cloud-Computing-System 400 Endpunkte der Datenströme.

Neben der ersten Schnittstelle 231 und der zweiten Schnittstelle 232 und diesen Schnittstellen zugeordnete Erfassungseinheiten 233, 234 für eingehende bzw. ausgehende Datenströme umfasst die Monitoring-Funktionseinheit 203 ein Betriebssystem bzw. eine App-Ausführungsumgebung 235 und einen Datenbus 236 vorgesehen, über den durch die Monitoring-Funktionseinheit 203 bereitgestellte Apps 238 Daten austauschen können. Die Apps 238 realisieren beispielsweise eine Filterung, Aggregierung oder sonstige Vorverarbeitung der Datenströme. Alternativ zu einer Vorverarbeitung der Datenströme können diese direkt bzw. ohne weitere Datenverarbeitung über die zweite Schnittstelle 232 in Richtung der Cloud-Computing-Systeme 400 weitergeleitet werden.

Außerdem umfasst die Monitoring-Funktionseinheit 203 im vorliegenden Ausführungsbeispiel ein Datenstrom-Integritätsmonitor 237, der beobachtete, dynamisch ermittelte Datenflüsse mit einer Referenz-Policy zulässiger Datenflüsse vergleicht. Dadurch kann überwacht werden, dass tatsächlich nur auf eine freigegebene, zulässige Art ermittelte Daten insbesondere an die Cloud-Computing-Systeme 400 weitergeleitet werden. Bei Abweichung von der Referenz-Policy kann eine vorgegebene Aktion ausgelöst oder zumindest eine Warnung signalisiert werden. Darüber hinaus können Datenpfad-Freigabe-Informationen bzw. Datenpfad-Autorisierungsinformationen verwaltet werden. Diese Informationen kennzeichnen, wann bzw. durch wen ein bestimmter Datenfluss als zulässig definiert wurde.

Über die erste Schnittstelle 231 und die dieser Schnittstelle zugeordnete Erfassungseinheit 233 für von den Automatisierungsgeräten 101-105 eingehende Datenströme erfasst die Monitoring-Funktionseinheit 203 im vorliegenden Ausführungsbeispiel Rohdaten der Automatisierungsgeräte 101-105. Diese Rohdaten können beispielsweise kritische Produktionsdaten sein, die Geheimnisse zu einem Produktionsprozess wiedergeben. Darüber hinaus erfasst die Monitoring-Funktionseinheit 203 über die zweite Schnittstelle 232 und die dieser Schnittstelle zugeordnete Erfassungseinheit 234 in Richtung der Cloud-Computing-Systeme 400 ausgehende Datenströme. Über die zweite Schnittstelle 232 zulässigerweise übermittelten Daten sind weniger kritisch, wenn es sich beispielsweise um aggregierte Daten, wie verdichtete Nutzungswerte oder KPI-Parameter, handelt.

Beispielsweise kann für eine Abfüllanlage als Nutzungswert durch eine App 238 ermittelt werden, dass sie 23 Stunden läuft. Dieser Wert kann zulässigerweise an externe Systeme, wie die Cloud-Computing-Systeme 400, übermittelt werden. Die Rohinformation, dass hinter dem Nutzungswert von 23 Stunden Laufzeit 14367 abgefüllte Flaschen stehen, soll im vorliegenden Ausführungsbeispiel nicht an ein externes System außerhalb der Abfüllanlage bereitgestellt werden, da es sich um geschäftskritische Produktionsdaten handelt. Falls über die zweite Schnittstelle 232 ein ausgehender Datenfluss von einem Datenpunkt für abgefüllte Flaschen ohne Vorverarbeitung in Richtung eines externen Systems auftreten sollte, so soll dies als unzulässiger Datenfluss erkannt werden.

Hierzu erstellt die Monitoring-Funktionseinheit 203 des Gateways 200 mittels einer Klassifizierungskomponente 239 jeweils eine erste Klassifizierung 21 der Datenpunkte nach Informationssicherheit-Kritikalität der von dort ausgehenden Datenströmen. Mittels der Apps 238 führt die Monitoring-Funktionseinheit 203 im vorliegenden Ausführungsbeispiel eine jeweils vorgebbare Pseudonymisierung 23 und Filterung bzw. Aggregierung 24 der von den Datenpunkten ausgehenden Datenströmen vor ihrer Weiterleitung über die zweite Schnittstelle 232 durch. Auf diese Weise kann die Monitoring-Funktionseinheit 203 aus durch die Automatisierungsgeräte 101-105 übermittelten Mess- bzw. Zustandsgrößen bzw. Rohdaten aggregierte Mess- bzw. Zustandsgrößen erstellen.

Auf Basis der jeweiligen ersten Klassifizierung 21 und der jeweiligen vorgebbaren Pseudonymisierung 23 und Filterung bzw. Aggregierung 24 erstellt die Klassifizierungskomponente 239 jeweils eine zweite Klassifizierung 22 nach Informationssicherheit-Kritikalität. Im Fall einer direkten Weiterleitung, also ohne Vorverarbeitung innerhalb des Gateways 203 sind die zweiten Klassifizierungen 22 mit der jeweiligen ersten Klassifizierung 21 identisch.

Bei einer zumindest versuchten Weiterleitung der Datenströme an eines der Cloud-Computing-Systeme 400 erstellt die Monitoring-Funktionseinheit 203 entsprechend den jeweiligen zweiten Klassifizierungen 22 - je nach Security-Kritikalität - die jeweiligen zweiten Klassifizierungen umfassende Warnungen 20 und signalisiert diese an einer Benutzerschnittstelle 240. Sind die zweiten Klassifizierungen 22 unkritisch, können dementsprechend Nachrichten 211, 212 mit den Mess- bzw. Zustandsgrößen, vorzugsweise in aggregierter Form, über die zweite Schnittstelle 232 an das jeweilige Cloud-Computing-System 400 weitergeleitet werden. Im vorliegenden Ausführungsbeispiel kann die Monitoring-Funktionseinheit 203 auch bei einem Empfang der Datenströme an der ersten Schnittstelle 232 entsprechend den jeweiligen ersten Klassifizierungen 21 - je nach Security-Kritikalität - die jeweiligen ersten Klassifizierungen umfassende Warnungen erstellen und an der Benutzerschnittstelle 240 signalisieren.

Bei einem als unzulässig erkannten Datenfluss kann beispielsweise das Gateway 200 neu gestartet (reboot) oder neu konfiguriert werden. Alternativ oder zusätzlich können sämtliche Kommunikationsverbindungen zu externen Systemen unterbrochen werden. Anstatt einen Datentransfer zu stoppen ist es grundsätzlich möglich, eine unzulässig erfolgende Datenübertragung - vorzugsweise manipulationsgeschützt - zu dokumentieren, beispielsweise in einem Log-Eintrag oder durch eine Warn-Nachricht: "ERROR: Access to Data Point not Permitted by Dataflow Contract".

Die Mess- bzw. Zustandsgrößen können beispielsweise semantische Attribute entsprechend OPC Unified Architecture als zugeordnete erste Klassifizierungen umfassen. Alternativ dazu können die Mess- bzw. Zustandsgrößen entsprechend Message Queueing Telemetry Transport Protocol (MQTT) durch die Automatisierungsgeräte 101-105 an das Gateway 200 übermittelt werden. In diesem Fall sind den Mess- bzw. Zustandsgrößen MQTT-Topics als erste Klassifizierungen zugeordnet, und die Mess- bzw. Zustandsgrößen umfassende Nachrichten 111-115 werden mit einer vorgebbaren Quality of Service (QoS) an das Gateway 200 übermittelt. Entsprechend einer weiteren Alternative können die Mess- bzw. Zustandsgrößen beispielsweise auch entsprechend Advanced Message Queuing Protocol (AMQP) übermittelt werden.

Die Warnungen 20 sind vorzugsweise jeweils mit einer dem Gateway 203 zugeordneten digitalen Signatur versehen, wobei bei einer Warnung 20 eine Blockierung der Weiterleitung des jeweiligen Datenstroms über die zweite Schnittstelle oder eine Fortsetzung der Weiterleitung mit Alarmierung erfolgt. Vorteilhafterweise erfolgt eine Blockierung der Weiterleitung für zweite Klassifizierungen 22, die als unzulässig für die Weiterleitung von Datenströmen über die zweite Schnittstelle 232 definiert sind.

Anhand der ersten Klassifizierungen 21 und der zweiten Klassifizierungen 22 können insbesondere auf den jeweiligen Datenstrom zwischen der ersten Schnittstelle 231 und der zweiten Schnittstelle 232 angewendete Datenverarbeitungsschritte ermittelt werden. Auf Basis der ermittelten Datenverarbeitungsschritte kann jeweils eine durch das Gateway 200 digital signierte Security-Attestierung 20 erstellt werden. Die Security-Attestierungen 20 können zur Auswertung an einen Betreiber des industriellen Automatisierungssystems übermittelt werden. Zusätzlich können die Security-Attestierungen 20 jeweils an einen Empfänger, der einem der Cloud-Computing-Systeme 400 zugeordnet ist, zur Auswertung übermittelt werden. Anhand der Security-Attestierungen 20 kann der Empfänger verifizieren, ob der jeweilige Datenstrom vertrauenswürdige Daten umfasst. Security-Attestierungen 20 können beispielsweise angeben, welche Datenflusskategorien aktuell bzw. in einem aktuellen Zeitraum, wie zurückliegender Zeitraum innerhalb der letzten Minute, 10 Minuten, 1 Stunde oder 24 Stunden, auftreten.

Zusätzlich zu den ersten Klassifizierungen 21 und den zweiten Klassifizierungen 22 kann auch eine Konfiguration des jeweiligen Automatisierungsgeräts 101-105 durch die Monitoring-Funktionseinheit 203 ermittelt und in Kombination mit den Klassifizierungen ausgewertet werden. Beispielsweise kann auf dieser Basis und auf Basis eines in Bezug auf eingehende und ausgehende Datenströme abstrahierten Datenverarbeitungsmodells ein Digital Twin der Monitoring-Funktionseinheit 203 bzw. des Gateways 200 zur Laufzeit gebildet werden. Damit können Datenverarbeitungsströme hinsichtlich ihrer Art beschrieben werden.

Entsprechend einer weiteren vorteilhaften Ausgestaltung kann einem Anwender angezeigt werden, welche reellen Daten sich hinter jeweiligen Datenfluss-Klassifizierungen verbergen. Eine Erfassung von Datenströmen mittels der Erfassungseinheiten 233, 234 kann dabei rückwirkungsfrei erfolgen, insbesondere durch Verwendung einer Datendiode. Darüber hinaus kann Monitoring-Funktionseinheit 203 neben einer Integration in das Gateway 200 auch als Zusatzkomponente für bestehende Gateways realisiert werden.

## Patentansprüche

1. Verfahren zur Datenübermittlung zwischen Automatisierungsgeräten eines industriellen Automatisierungssystems und zumindest einem Rechnersystem über ein Weitverkehrsnetz, bei dem
- die Automatisierungsgeräte (101-105) Mess- und/oder Zustandsgrößen jeweils an einem Datenpunkt über eine erste Schnittstelle (231) eines Gateways (200) des Automatisierungssystems bereitstellen, wobei das Gateway eine zweite Schnittstelle (232) zur Weiterleitung von den Datenpunkten jeweils zugeordneten Datenströmen an das Rechnersystem (400) umfasst,
- das Gateway jeweils eine erste Klassifizierung (21) der Datenpunkte nach Informationssicherheit-Kritikalität der von dort ausgehenden Datenströmen erstellt,
- das Gateway eine jeweils vorgebbare Filterung und/oder Aggregierung (24) der von den Datenpunkten ausgehenden Datenströmen vor ihrer Weiterleitung über die zweite Schnittstelle durchführt,
- das Gateway auf Basis der jeweiligen ersten Klassifizierung und der jeweiligen vorgebbaren Filterung und/oder Aggregierung jeweils eine zweite Klassifizierung (22) nach Informationssicherheit-Kritikalität erstellt,
- das Gateway bei einer zumindest versuchten Weiterleitung der Datenströme an das Rechnersystem entsprechend den jeweiligen zweiten Klassifizierungen die jeweiligen zweiten Klassifizierungen umfassende Warnungen (20) erstellt und an einer Benutzerschnittstelle (240) signalisiert.

2. Verfahren nach Anspruch 1,
ei dem das Gateway bei einem Empfang der Datenströme an der ersten Schnittstelle entsprechend den jeweiligen ersten Klassifizierungen die jeweiligen ersten Klassifizierungen umfassende Warnungen erstellt und an der Benutzerschnittstelle signalisiert.

3. Verfahren nach einen der Ansprüche 1 oder 2,
bei dem anhand der ersten und zweiten Klassifizierungen auf den jeweiligen Datenstrom zwischen der ersten und zweiten Schnittstelle angewendete Datenverarbeitungsschritte ermittelt werden, bei dem auf Basis der ermittelten Datenverarbeitungsschritte jeweils eine durch das Gateway digital signierte Security-Attestierung erstellt wird und bei dem die Security-Attestierungen zur Auswertung an einen Betreiber des industriellen Automatisierungssystems übermittelt werden.

4. Verfahren nach Anspruch 3,
bei dem die Security-Attestierungen jeweils an einen dem Rechnersystem zugeordneten Empfänger zur Auswertung übermittelt werden und bei dem der Empfänger anhand der Security-Attestierungen verifiziert, ob die jeweiligen Datenströme vertrauenswürdige Daten umfassen.

5. Verfahren nach einem der Ansprüche 1 bis 4,
bei dem die vorgegebene Filterung und/oder Aggregierung eine direkte Weiterleitung oder eine Datenverarbeitung umfasst.

6. Verfahren nach Anspruch 5,
bei dem die zweiten Klassifizierungen bei einer direkten Weiterleitung mit der jeweiligen ersten Klassifizierung identisch sind.

7. Verfahren nach einem der Ansprüche 1 bis 6,
bei dem die Warnungen jeweils mit einer dem Gateway zugeordneten digitalen Signatur versehen sind und bei dem bei einer Warnung eine Blockierung der Weiterleitung des jeweiligen Datenstroms über die zweite Schnittstelle oder eine Fortsetzung der Weiterleitung mit Alarmierung erfolgt.

8. Verfahren nach Anspruch 7,
bei dem eine Blockierung der Weiterleitung für zweite Klassifizierungen erfolgt, die als unzulässig für die Weiterleitung von Datenströmen über die zweite Schnittstelle definiert sind.

9. Verfahren nach einem der Ansprüche 1 bis 8,
bei dem die Datenströme Ende-zu-Ende verschlüsselte Daten umfassen.

10. Verfahren nach Anspruch 9,
bei dem das jeweilige Automatisierungsgerät und das Rechnersystem Endpunkte der Datenströme sind.

11. Verfahren nach einem der Ansprüche 1 bis 10,
bei dem die Mess- und/oder Zustandsgrößen semantische Attribute entsprechend OPC Unified Architecture als zugeordnete erste Klassifizierungen umfassen.

12. Verfahren nach einem der Ansprüche 1 bis 10,
bei dem die Mess- und/oder Zustandsgrößen entsprechend Message Queueing Telemetry Transport Protocol, MQTT, durch die Automatisierungsgeräte an das Gateway übermittelt werden, bei dem den Mess- und/oder Zustandsgrößen MQTT-Topics als erste Klassifizierungen zugeordnet sind und bei dem die Mess- und/oder Zustandsgrößen umfassende Nachrichten mit einer vorgebbaren Quality of Service übermittelt werden.

13. Gateway zur Durchführung eines Verfahrens nach einem der Ansprüche 1 bis 12, wobei das Gateway dafür ausgestaltet und eingerichtet ist,
- dass Automatisierungsgeräte (101-105) Mess- und/oder Zustandsgrößen jeweils an einem Datenpunkt über eine erste Schnittstelle (231) des Gateways (200) bereitstellen, wobei das Gateway eine zweite Schnittstelle (232) zur Weiterleitung von den Datenpunkten jeweils zugeordneten Datenströmen an ein Rechnersystem (400) über ein Weitverkehrsnetz (301, 302) umfasst,
- jeweils eine erste Klassifizierung (21) der Datenpunkte nach Informationssicherheit-Kritikalität der von dort ausgehenden Datenströmen zu erstellen,
- eine jeweils vorgebbare Filterung und/oder Aggregierung der (24) von den Datenpunkten ausgehenden Datenströmen vor ihrer Weiterleitung über die zweite Schnittstelle durchzuführen,
- auf Basis der jeweiligen ersten Klassifizierung und der jeweiligen vorgebbaren Filterung und/oder Aggregierung jeweils eine zweite Klassifizierung (22) nach Informationssicherheit-Kritikalität zu erstellen,
- bei einer zumindest versuchten Weiterleitung der Datenströme an das Rechnersystem entsprechend den jeweiligen zweiten Klassifizierungen die jeweiligen zweiten Klassifizierungen umfassende Warnungen (20) zu erstellen und an einer Benutzerschnittstelle (240) zu signalisieren.
